# EUROPÄISCHE PATENTSCHRIFT

(11) **EP 2 385 274 B1**
(45) Veröffentlichungstag und Bekanntmachung des Hinweises auf die Patenterteilung: **28.11.2012**
(21) Anmeldenummer: 10004795.0
(22) Anmeldetag: 06.05.2010
(51) Int. Cl.: F16J 15/06, F16J 15/02, H01M 2/08

(54) **Profildichtung mit Eckverbindern**
Profile seal with corner connectors
Joint profilé doté de connecteurs d'angle

(43) Veröffentlichungstag der Anmeldung: 09.11.2011
(73) Patentinhaber: Carl Freudenberg KG, 69469 Weinheim (DE)
(72) Erfinder: Kritzer, Peter, Dr., 67147 Forst (DE); Schoenberg, Frank, 69469 Weinheim (DE); Kramer, Thomas, 64668 Rimbach (DE); Paul, Ricki, 69168 Wiesloch (DE); Lauer, Frank, 69168 Wiesloch (DE); Puett, Georg, 64689 Grasellenbach (DE); Nahrwold, Olaf, 67071 Ludwigshafen (DE); Klenk, Thomas, Dr., 69221 Dossenheim (DE)

(56) Entgegenhaltungen:
- WO-A1-2005/052416
- WO-A2-02/38967
- DE-A1-102006 056 055
- US-A- 3 231 289
- US-A- 4 380 856

## Beschreibung

Die Erfindung betrifft eine Dichtung für ein Gehäuse gemäß dem Oberbegriff des Patentanspruchs 1.

### Stand der Technik

Eine solche Dichtung ist aus der US 4,380,856 bekannt. Die WO 02/38 967 A2 zeigt ein Dichtungssystem für eine Schwingtür. Die WO 2005/052 416 A1 zeigt an einem Eckverbinder auf Stoß anliegende Profildichtungen. Die DE 10 2006 056 055 A1 zeigt eine Dichtung mit strahlenresistentem Polymer. Die US 3,231,289 zeigt eine Dichtung, deren Segmente gegeneinander verschwenkbar sind.

Extrudierte Profildichtungen werden eingesetzt, um großflächige Bauteile abzudichten. Beispiele sind Gehäuse, die aus einer Wanne mit einem entsprechenden Deckel bestehen.

Profildichtungen erlauben eine optimale mechanische Auslegung im Hinblick auf Druck oder Setzverhalten. Dadurch können beispielsweise Abstände von Befestigungsschrauben reduziert werden, ohne dass mechanische Verspannungen zweier Bauteile zu erwarten sind. Hierdurch erlauben sie ein mehrfaches Öffnen des Gehäuses ohne Verzug ("Wellblech-Phänomen").

Eine Anbringung von Profildichtungen über Ecken ist häufig nur sehr schwer realisierbar, da eine mit der Krümmung verbundene Materialverdrängung die Dichteigenschaften verschlechtert. Dies ist umso problematischer, je komplizierter das Profil der Profildichtung ist.

Häufig sind komplizierte Profile nicht für enge Kurven geeignet. Zudem ergeben sich beim händischen, ungenauen Abschneiden von Profildichtungen hohe Toleranzen.

Gerade dort, wo die maßgeschneiderten Profile eingesetzt werden könnten, treten insbesondere an Ecken Dichtungsprobleme auf. Selbst bei einfachen Profildichtungen, beispielsweise einer Rundschnur, lassen sich keine beliebig kleinen Kurvenradien erzeugen.

Des Weiteren können Elastomere während ihrer Lagerung schrumpfen. Daher ist es vorteilhaft, extrudierte Profildichtungen entweder erst kurz vor ihrer Verwendung abzulängen bzw. solche Elastomere einzusetzen, die einen vergleichsweise geringen Schrumpf aufweisen.

Für große Stückzahlen werden Gehäusedichtungen als Bauteile in eigens dafür hergestellten Werkzeugen gefertigt. Diese sind in der Regel erst bei größeren Stückzahlen ab ca. 1000 Stück wirtschaftlich herstellbar, insbesondere da sie ein hohes Investment für entsprechende Werkzeuge sowie großformatige Pressen erfordern.

Daher werden für derartige Anforderungen bei kleinen Stückzahlen meist Flachdichtungen aus Matten oder Plattenmaterial konfektioniert. Hierbei ist allerdings nachteilig, dass ein hoher Materialausschuss entsteht. Nachteilig ist auch die fehlende Möglichkeit, eine Profildichtung der Anwendung anzupassen. Eine Profildichtung kann bei Verwendung von Matten- / Plattenmaterial nicht problemlos gefertigt werden.

Auf Deckeln oder Wannen von Gehäusen aufgebrachte und nachträglich vernetzte Dichtungsraupen erlauben keine optimierte Ausgestaltung eines Profils. Zudem steht für die Dichtungsraupen nur ein vergleichsweise kleines Spektrum an Elastomeren zur Verfügung. Nachteilig ist zudem, dass so aufgebrachte Dichtungsraupen sich bei Öffnen des Gehäuses ablösen und dadurch unbrauchbar werden können. Für eine Ersatzdichtung ist es dann notwendig, den Deckel bzw. die Wanne einer Raupenauftragsapparatur zuzuführen.

Vor diesem Hintergrund ist wünschenswert, optimierte Gehäusedichtungen auch in kleinen Stückzahlen wirtschaftlich anbieten zu können.

Großformatige Batterie-Systeme bzw. andere elektrochemische Speicher wie beispielsweise Superkondensatoren finden in immer mehr Applikationen Verwendung.

Beispielsweise in Elektrofahrzeugen oder Hybrid-Fahrzeugen, in industriellen Traktionssystemen, wie Gabelstaplern oder Robotern, in Flurförderfahrzeugen sowie in Sport- und Freizeit-Fahrzeugen. Weitere Anwendungen finden sich in Bahn und Flugzeugen.

Bei all diesen Anwendungen bestehen die Batterien in der Regel aus einer Vielzahl von einzelnen Zellen, welche in einem Batteriegehäuse untergebracht sind. Typische Spannungen der so verwendeten Energiespeicher betragen bis zu 1000 V. Stromstärken von mehr als 100 A sind möglich. Typische Dimensionen der Batteriegehäuse sind 500 mm x 800 mm.

Das Batteriegehäuse hat die Aufgabe, die innenliegenden Komponenten vor der Umgebung zu schützen. Insbesondere ist ein Eindringen von Wasser oder anderen leitenden Flüssigkeiten ins Batteriegehäuse schädlich, da es bei Kontakt mit stromführenden Teilen Kurzschlüsse verursachen und mit den Aktivkomponenten der Zellen, insbesondere mit Lithium, sehr heftig reagieren kann, wobei z.B. Wasserstoff-Gas freigesetzt wird. Des Weiteren kann es zu einer Korrosion der Überwachungselektronik bzw. des Batterie-Management-Systems kommen.

Da Batterie-Systeme sehr teuer sind, muss das Batteriegehäuse wiederholt öffenbar sein. Anderenfalls könnte beispielsweise ein loser Kontakt in der Überwachungselektronik nur nach Aufschweißen eines Batteriegehäuses repariert werden. Der Prozess des Aufschweißens birgt allerdings ein hohes Risiko, da dadurch die temperatursensitiven Batteriekomponenten nachhaltig geschädigt werden können.

Die Gehäuse von großformatigen Energiespeichern bestehen in der Regel aus einer Wanne, in welcher die Komponenten platziert sind, und einem Deckel. Deckel und Wanne bestehen entweder aus Metall oder auch aus hochfestem Kunststoff. Sie werden miteinander stoffschlüssig und dicht verbunden. Als Dichtungen kommen häufig Elastomerdichtungen zum Einsatz.

Das Batteriegehäuse bzw. der Batteriegehäuse-Dichtungs-Verbund muss in der Regel einen Schutz vor Staub, einen Schutz vor gelegentlich von außen anstehendem Wasser und einen Schutz vor Wasser bieten, welches durch Reinigungsgeräte, beispielsweise Hochdruck-Reiniger, von außen ansteht.

In der Regel muss das Batteriegehäuse die Sicherheitsklasse IP 67 erfüllen. Bei diesem Test wird Wasser von einem Überdruck von 0.1 bar (1 m Wassersäule) über einen Zeitraum von 30 min von außen anstehen lassen. Nach diesem Test darf sich kein Wasser im Inneren des Batteriegehäuses befinden. Bei besonderen Anwendungen, beispielsweise Batterien für Geländewagen oder Elektro-Schiffen, können noch weitere Anforderungen notwendig sein, beispielsweise die Erfüllung der Sicherheitsklasse IP 68.

Zusätzlich kann gefordert sein, dass das Innere eines Batteriegehäuses vor elektromagnetischer Störstrahlung geschützt ist bzw. die Batterie keine elektromagnetische Störstrahlung aussendet, was Konsequenzen für die Ausgestaltung der Dichtung mit sich bringt. Die Dichtung sollte darüber hinaus Toleranzen der Oberflächengüte sowie ggf. Verwindungen der Bauteile des Batteriegehäuses ausgleichen können.

Die vorgenannten Anforderungen können auch bei weiteren Anwendungen, beispielsweise bei Schaltschränken, Ladestationen für elektromobile Einrichtungen und Fenstern auftreten.

Aus dem Stand der Technik sind derzeit vulkanisierte Flachdichtungen bekannt. Diese können ein Profil für optimalen Toleranzausgleich aufweisen, erlauben eine schnelle Montage und einen treppenförmigen Aufbau.

Bei diesen Dichtungen ist nachteilig, dass sie große Werkzeuge erfordern. Hiermit sind hohe Kosten verbunden. Eine Fertigung lohnt sich daher erst bei Stückzahlen von mehr als 1000 Stück. Diese Dichtungen sind auf ein Design und einen Anwender festgelegt und in der Regel auf Serienproduktionen beschränkt.

Bekannt ist auch, entweder auf den Deckel oder die Wanne eine Dichtung mittels eines Raupenauftrags aufzubringen. Hierbei ist vorteilhaft, dass solche Dichtungen auf Batteriegehäuse unterschiedlicher Größen flexibel aufbringbar sind. Nachteilig ist, dass nahezu keine Profilierung aufgebracht werden kann, dass die Oberfläche ggf. vorbehandelt, beispielsweise entfettet oder aktiviert, werden muss, dass große Bauteile, beispielsweise Deckel, gehandhabt werden müssen und dass eine Raupenauftrags-Apparatur vorhanden sein muss. Beim Öffnen des Batteriegehäuses wird die Dichtung in der Regel zerstört, da sie unspezifisch an Deckel bzw. Wanne festhaftet.

Des Weiteren sind aus Vollmaterial, beispielsweise Platten, gestanzte Dichtungen, insbesondere aus geschlossenporigen Materialien wie "Moosgummi", bekannt. Diese sind einfach herstellbar und verursachen nahezu keine Werkzeugkosten. Nachteilig ist allerdings, dass auf diesen kein topografisches Profil möglich ist, um einen Toleranzausgleich herzustellen. Des Weiteren erzeugen diese Dichtungen relativ viel Materialausschuss, da beim Ausstanzen das Restmaterial in der Mitte einer Platte nicht mehr verwendet werden kann. Weiter können Dickentoleranzen des Plattenmaterials die Dichteigenschaften negativ beeinträchtigen, wobei ein Druckverformungsrest auftreten kann. Bei großen Andruckflächen ist ein geringer Toleranzausgleich gegeben, bei schmalen Strukturen sind diese Dichtungen schwer zu handhaben. Darüber hinaus weisen insbesondere Schaummaterialien einen relativ ungünstigen Druckverformungsrest auf.

Bekannt sind auch Profildichtungen, welche an Stößen zusammengeklebt oder vulkanisiert werden. Diese Dichtungen erlauben die Ausbildung eines Profils. Nachteilig ist allerdings, dass bei einem Materialschrumpf vorgesehene Geometrien nicht mehr passgenau sein können. Diese Dichtungen sind des Weiteren schlecht handhabbar und nach der Vulkanisation nicht mehr variierbar. Der Austausch einzelner Dichtungsabschnitte, die beispielsweise durch Alterung, chemischen oder thermischen Angriff unbrauchbar geworden sind, ist nur schwer oder nur durch Austausch der kompletten Dichtung möglich.

Im Ergebnis ergibt sich demnach derzeit folgende Situation:

Für große Stückzahlen kann eine Dichtung perfekt dimensioniert werden. Hierfür sind aber teure Werkzeuge notwendig, so dass sich eine solche Dichtung erst bei großen Stückzahlen wirtschaftlich rechnet

Für Prototypen- und Vorserien-Stückzahlen existiert bisher keine optimale Lösung.

Die aus Vollmaterial gearbeiteten Dichtungen können nicht topografisch strukturiert werden und haben somit nur eine beschränkte Möglichkeit des Toleranzausgleichs. Zudem erfüllen sie hinsichtlich Flexibifität, in Bezug auf ihre Dimensionierung, in der Regel nicht die Anforderungen der Batteriehersteller.

### Darstellung der Erfindung

Der Erfindung liegt daher die Aufgabe zu Grunde, eine modulare Dichtung anzugeben, welche die Vorteile einer Profildichtung mit denen eines flexiblen Aufbaus kombiniert.

Die vorliegende Erfindung löst die zuvor genannte Aufgabe durch die Merkmale des Patentanspruchs 1.

Danach ist eine Dichtung der eingangs genannten Art dadurch gekennzeichnet, dass mindestens zwei Profildichtungen durch einen Eckverbinder an jeweils einem ihrer Enden miteinander verbunden sind.

Erfindungsgemäß ist erkannt worden, dass eine Profildichtung geschaffen werden kann, welche mit Hilfe von Eckverbindern umlaufend ausgestaltet werden kann. Somit lassen sich über einen großen Bereich optimierte Profildichtungen verwenden, ohne diese um Ecken biegen zu müssen. Durch diesen Aufbau lassen sich Gehäusebauteile nachhaltig dicht miteinander verbinden. Der Aufbau ist dabei tolerant gegenüber Längenvariationen der Profildichtung. Auch wenn eine Profildichtung innerhalb von Toleranzen etwas zu kurz abgeschnitten wird, ist das System Deckel-Gehäuse noch dicht. Überraschenderweise ist ein solch modulares System auch gegenüber von außen anstehender Flüssigkeit dicht. Da die Auflagefläche an einer Seite, in der Regel an der Wanne eines Batteriegehäuses, größer ist als an der anderen Seite, insbesondere am Deckel, ist ein Öffnen problemlos möglich, ohne dass die Profildichtung am Deckel verklebt. Damit ist sichergestellt, dass das Gehäuse mehrfach wieder geöffnet werden kann, ohne dass die Dichtung Schaden nimmt.

Ein besonderer Vorteil des flexiblen Dichtsystems liegt auch in Anwendungen bei denen bauteilbedingt, aufgrund von Herstellverfahren, Größe usw., mit besonders großen Streubreiten der Fertigungsmassen zu rechnen ist. Hierbei erlauben Dichtungen, die aus einem Werkzeug gefertigt werden, in aller Regel nur die sichere Abdichtung des mittleren Abmessungsbereichs wobei an den Extremen mit Abdichtfehlem zu rechnen ist. Der neuartige modulare Ansatz hingegen ermöglicht hierbei zum Beispiel den Einsatz einer einzelnen dickeren oder dünneren Sondereckverbindung oder einer einzelnen dickeren oder dünneren Profildichtung um eine einzeln auftretenden Fehlstelle oder Toleranzausreißer sicher abzudichten. Zudem kann ein Eckverbinder, nämlich die Profildichtungsverbindung, so gezielt auf unterschiedliche Steifigkeiten einer Deckel- oder Flanschverbindung hin optimiert werden. Beispielsweise können in Bereichen, in denen eine hohe Flächenpressung zur Verfügung steht, Profildichtungen aus härteren Werkstoffen oder Designs und in Bereichen mit weiten Schraubenabständen besonders weiche Varianten verwendet werden.

Mindestens eine Profildichtung ist bei Druckbeaufschlagung ihrer Dichtungsfläche konvex auswölbbar. Hierdurch ist eine zuverlässige Abdichtung möglich. Die Profildichtung funktioniert insbesondere, wenn sie bei Krafteinwirkung von oben nach außen ausweicht. Ein "Kavernen-bildender" Dichtungsquerschnitt, wie er für gängige Profildichtungen verwendet wird, führt zu einem überraschenden Leckageweg, der um die Profildichtung im Eckverbinder herum erfolgt. Je nach Fläche der Kaverne tritt die Undichtigkeit erst nach längeren Standzeiten auf.

Mindestens eine Profildichtung weist einen innenliegenden, vom Profildichtungsmaterial umschlossenen Hohlraum auf. Hierdurch wird die Auswölbung der Profildichtung bei Druckbeaufschlagung erleichtert.

Die Eckverbinder könnten weicher als die Profildichtungen sein. An die Eckverbinder werden nur vergleichsweise geringe Anforderungen hinsichtlich ihrer Elastizität gestellt, da die Dichtfunktion die Profildichtung übemimmt. Ein Eckverbinder sollte daher weicher sein als die Profitdichtung. Ein weicheres Material hat darüber hinaus den Vorteil, dass es der Auswölbung der druckbeaufschlagten Profildichtung folgen kann, in dem es formschlüssig weggedrückt wird und dadurch die Dichtwirkung sicher gestellt ist.

Die Eckverbinder könnten aus einem weichen Elastomer-Vollmaterial gefertigt sein. Solche Materialien haben den Vorteil, dass sie keine Poren aufweisen, die bei Bearbeitung, beispielsweise einem Ausstanzen, eine offene und/ oder rauhe Oberfläche zurücklassen.

Die Eckverbinder könnten aus einem elastischen, geschlossenporigen Material, nämlich einem Schaummaterial, gefertigt sein. Dies hat den Vorteil eines geringeren Gewichtes und einer noch besseren Nachgiebigkeit bei der Auswölbung der Profildichtung. Bei Schaummaterial hat sich gezeigt, dass Materialien mit mittleren Porengrößen der geschlossenen Poren von wniger als 0,1 mm ohne Dichtungsprobleme verwendet werden konnten.

Bei Materialien mit mittleren Porengrößen der geschlossenen Poren von mehr 0,3 mm können unter Umständen Dichtungsprobleme auftreten, die auf die hohe Rauhigkeit durch die angeschnittenen Poren zurückzuführen ist.

Die Eckverbinder könnten einen mehrlagigen Aufbau aufweisen. Hierdurch sind die Kräfte längs eines Verpressungsweges einstellbar. Die Eckverbinder könnten längs ihrer Höhe aus verschieden harten Werkstoffen bestehen. Dadurch lässt sich ein optimiertes, sanft ansteigendes Verpressungsweg/Kraft-Verhältnis erzielen.

Die Eckverbinder weisen Aussparungen zur Aufnahme der Enden der Profildichtungen auf. In den Eckverbindem sind hierzu Aussparungen ausgebildet, in welche eine Profildichtung eingeführt wird. Eine Aussparung in den Eckverbindem muss speziell dimensioniert werden, um mit der Profildichtung zusammenzuwirken. Durch die besondere Form der Aussparung können vergleichsweise große Unterschiede beim Ablängen der Profildichtungen toleriert werden.

Die Aussparungen könnten im Querschnitt trapezförmig ausgestaltet sein. Somit ist ein Verklemmen eines Endes einer Profildichtung möglich.

Die Trapezform könnte derart ausgebildet sein, dass sich die Aussparung in Richtung der Profildichtung aufweitet oder verjüngt.

Die Aussparungen könnten gewölbte Seitenflanken zur Anlage an die Profildichtung aufweisen. Hierdurch wird eine besonders starke Verklemmung eines Endes der Profildichtung ermöglicht.

Die Eckverbinder und die Profildichtungen könnten ineinander steckbar sein. Die Verbindung zwischen Eckverbinder und Profildichtung könnte rein mechanisch erfolgen, beispielsweise durch eine Steckverbindung.

Zwischen Eckverbinder und Profildichtung könnte eine weitere, gelartige oder sehr weiche Verbindung mechanisch aufgebracht sein, die die Steckverbindung weiter unterstützt.

Die Eckverbinder und die Profildichtungen könnten miteinander durch chemische und/ oder thermische Fixierung verbindbar sein. Die Verbindung zwischen Eckverbinder und Profildichtung kann zusätzlich durch Aufbringen von Klebern, durch Vulkanisation oder durch Verschweißung, auch durch einen Heißluftfön, erfolgen.

Die Eckverbinder und die Profildichtungen könnten Auflageflächen aufweisen, an denen ein Klebeband oder Klebstoff angeordnet ist. Die Eckverbinder bzw. die Profildichtungen könnten mittels Klebeband, insbesondere doppelseitige Klebeband, an den Deckel oder die Wanne fixiert werden. Dazu können Wanne und / oder Deckel mit einem doppelseitigen Klebeband ausgerüstet sein, welches vor Montage abgezogen wird. Die Eckverbinder bzw. die Profildichtungen könnten mittels Klebstoff auf die Oberfläche des Deckels oder der Wanne geklebt werden. Dies unterstützt zum einen die Montierbarkeit der Komponenten, zum anderen stellt sie zusätzlich sicher, dass beim Auseinanderbau des Gehäuses die Dichtung stets auf der gewünschten Seite verbleibt.

Mindestens ein Eckverbinder könnte in eine Schraube oder eine Hülse integriert sein. Die Eckverbinder könnten an eine Schraube oder Hülse anvulkanisiert bzw. fest mit dieser verbunden sein, so dass die Schraube bzw. die Hülse und der Eckverbinder in einem Bauteil integriert sind. Dies hat den Vorteil, dass Schrauben, die sowieso für den Zusammenbau eines Gehäuses benötigt werden, bereits Eckverbinderfunktion erfüllen können. Vor diesem Hintergrund könnte der Eckverbinder eine Ausnehmung, insbesondere ein Loch, enthalten, durch welche eine Schraube bzw. eine Schraube und eine Hülse geführt werden.

Mindestens ein Eckverbinder könnte einen Endanschlag aufweisen. Der Eckverbinder könnte hierfür eine Hülse bzw. eine Buchse enthalten, welche einen konstanten Abstand und damit einen konstanten Anpressdruck auf die Dichtung gewährleistet. Die Hülsen könnten dabei fest mit dem Eckverbinder verbunden sein, insbesondere mittels Verklebung oder Vulkanisation.

Die Eckverbinder und / oder die Profildichtungen könnten elektrisch leitfähige Partikel aufweisen. Die Profildichtung bzw. die Profildichtung und die Eckverbinder können mit elektrisch leitfähigen Partikeln ausgerüstet sein. Dies stellt sicher, dass keine störende elektromagnetische Strahlung aus einem bzw. in ein Batteriegehäuse gelangen kann. Eine solche Strahlung kann z.B. auftreten, wenn aus der Batterie sich schnell ändernde Strörne gezogen werden. Eine solche Strahlung kann andere, anfällige Komponenten im Fahrzeug, insbesondere das Batterie-Überwachungssystem oder die Fahrzeugelektronik, schädlich beeinflussen. Die zuvor genannten Partikel und / oder Fasern können beispielsweise aus Ruß, Graphit, Carbon Nanotubes, Graphenen oder Metall bestehen.

Die Eckverbinder könnten aus einem Plattenmaterial hergestellt werden. Typische Verfahren hierfür sind beispielsweise Stanzen, Schneiden mittels Säge, Laser oder Wasserstrahl oder andere Verfahren der mechanischen Abtragung.

Die Eckverbinder könnten ebenfalls abschnittsweise aus einem Profil gefertigt werden, wobei die einzelnen Eckverbinderstücke dann scheibchenweise abgeschnitten werden. Hierbei kann die Höhe der Eckverbinder individuell an die Höhe der Profildichtung bzw. den Anpressdruck von Wanne und Deckel angepasst werden.

Ein Gehäuse, insbesondere ein Batteriegehäuse, könnte mit einer Dichtung der hier beschriebenen Art versehen sein.

Die vorliegenden Ausführungen lassen sich auf weitere Systeme und / oder Anwendungen ausdehnen, insbesondere auf Anwendungen, bei welchen ein Innenraum permanent gegenüber einem Außenraum geschützt sein soll. Hierbei kann der Außenraum mit Gas, wässrigem oder ölbasiertem Medium beaufschlagt sein. In Abhängigkeit vom Medium und den Umgebungsbedingungen, insbesondere der Temperatur, muss der Werkstoff für die Dichtung ausgelegt sein. Die Dichtung kann beispielsweise in Schaltschränken oder Schutzgehäusen angewendet werden, in deren Innerem sich empfindliche Bestandteile oder Bauteile befinden.

Die vorliegenden Ausführungen lassen sich auch auf Anwendungen ausdehnen, bei welchen ein Außenraum permanent gegenüber einem Innenraum geschützt werden soll bzw. bei denen sichergestellt sein soll, dass ein Medium nicht aus dem Innenraum gelangen kann. Solche Anwendungen sind im Zusammenhang mit Motoren, Getrieben, pharmazeutischen, chemischen oder auch bio- oder pharmachemischen Reaktoren, Tanks usw. denkbar. Dabei stellt das Medium im Innenraum entweder eine Systemkomponente, wie Schmieröl, Treibstoff, Kühlflüssigkeit oder ähnliches dar, oder aber eine Komponente, die im Innern gespeichert bzw. gelagert wird.

Die in der Beschreibung und/ oder den Patentansprüchen verwendeten Abkürzungen werden nachfolgend erklärt:
NBR steht für Nitril-Butadien-Kautschuk. HNBR steht für hydrierter Nitril-Butadien-Kautschuk. EPDM steht für Ethylen-Propylen-Dien-Kautschuk. FKM steht für Flour-Kautschuk und ACM steht für Acrylat-Kautschuk.

IP 67 beschreibt eine Schutzart, nämlich Wasserschutz nach DIN EN 60529 bzw. DIN 40050 Teil 9. Dabei umfasst Schutzart:
A) Vollständiger Berührungsschutz; Schutz gegen Eindringen von Staub (staubdicht)
B) Geschützt vor eindringendem Wasser beim Eintauchen

### Kurzbeschreibung der Zeichnung

In der Zeichnung zeigen
- Fig. 1: eine perspektivische Ansicht einer Wanne, einer Dichtung und e ines Deckels eines Batteriegehäuses,
- Fig. 2: eine Draufsicht auf eine Dichtung, welche aus Profildichtungen und Eckverbindern besteht,
- Fig. 3: eine Detailansicht eines Eckverbinders mit einsteckbaren Profildichtungen,
- Fig. 4: eine Schnittansicht des Querschnitts einer Profildichtung,
- Fig. 5: eine Schnittansicht des Querschnitts einer Profildichtung bei Belastung,
- Fig. 6: eine nicht geeignete Profildichtung mit einer nach außen geöffneten Kaverne,
- Fig. 7: eine Darstellung eines Leckageweges,
- Fig. 8: verschiedene Ausgestaltungen der Aussparungen in Eckverbindern,
- Fig. 9: Aussparungen in Eckverbindern, mit gewölbten Seitenflanken,
- Fig. 10: weitere verschiedene Ausgestaltungen von Eckverbindern, und
- Fig. 11: weitere verschiedene Ausgestakungen von Eckverbindern, insbesondere eines Eckverbinders mit drei Aussparungen sowie Linear-Verbindern.

### Ausführung der Erfindung

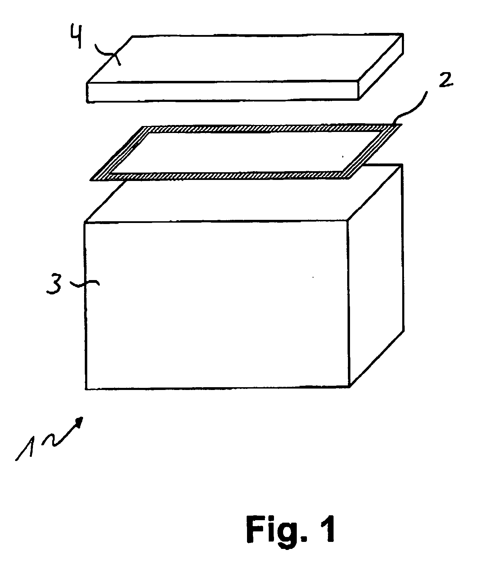

Fig. 1 zeigt ein Batteriegehäuse 1, enthaltend eine Dichtung 2. Fig. 1 zeigt ein Batteriegehäuse 1 mit drei wesentlichen Komponenten, nämlich einer Wanne 3, einem Deckel 4 und einer dazwischen liegenden Dichtung 2. Prinzipiell kommen auch verschweißte Systeme infrage. Ein auseinanderbaubarer Aufbau stellt aber sicher, dass bei Defekten innerhalb der Batterie, beispielsweise losen Kontakten oder einer Leckage des Kühlsystems, das Batteriegehäuse 1 geöffnet und der Schaden behoben werden kann. Bei einem verschweißten Batteriegehäuse 1 würde auch ein kleinerer Defekt dazu führen, dass die komplette, hochpreisige Batterie außer Betrieb genommen werden müsste.

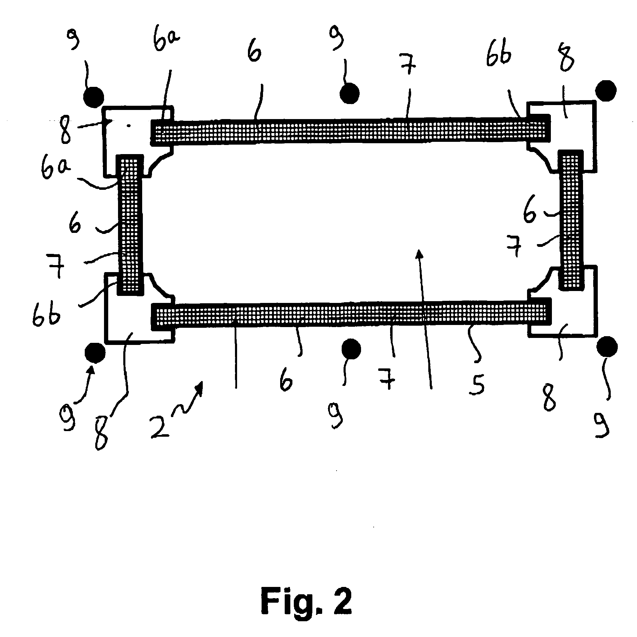

Fig. 2 zeigt in einer Draufsicht die Dichtung 2 für das Batteriegehäuse 1, umfassend einen Grundkörper 5, wobei der Grundkörper 5 Profildichtungen 6 mit profilierten Dichtungsflächen 7 aufweist, wobei die Profildichtungen 6 erste Enden 6a und zweite Enden 6b aufweisen und wobei mindestens zwei Profildichtungen 6 durch einen Eckverbinder 8 an jeweils einem ihrer Enden 6a miteinander verbunden sind. Die Eckverbinder 8 und die Profildichtungen 6 sind ineinander steckbar.

Fig. 2 zeigt, dass die Dichtung 2 aus modular aufgebauten Profildichtungen 6 besteht, welche in Eckverbindern 8 platziert sind. Diese umgeben eine Wanne 3 gemäß Fig. 1. Die Profildiclitungen 6 bzw. die Eckverbinder 8 werden mit Schrauben 9 verpresst, wobei ein Endanschlag mit Hilfe von Hülsen und / oder Unterlegscheiben gewährleistet wird.

Die Profildichtungen 6 bestehen aus bestimmten Werkstoffen. Da lediglich zeitweise Wasser von außen anstehen kann, können neben den bekannten "Wasser-Dichtungs-Komponenten" wie EPDM auch NBR-Elastomere verwendet werden. NBR ist vorteilhaft, da er nach Extrusion nur einen geringen Schrumpf aufweist und somit auch abgelängt gelagert werden kann. Für Sonderanwendungen können auch Elastomere aus HNBR, Fluor-Kautschuk, Silikon-Kautschuk oder anderen Elastomer-Materialien verwendet werden.

Die Eckverbinder 8 und / oder die Profildichtungen 6 können elektrisch leitfähige Partikel enthalten. Zur Abschirmung vor elektromagnetischer Strahlung können den Elastomeren elektrisch leitfähige Substanzen, insbesondere Metall oder Kohlenstoff, zugeschlagen sein.

Typische Härten der Profildichtungen betragen 50 - 80 Shore. Für Anwendungen, bei denen ein Gehäuse abgedichtet werden soll, außerhalb bzw. innerhalb dessen sich Öl befindet, können ölbeständige Werkstoffe für die Profildichtungen 6 verwendet werden. Hierzu bietet sich für moderate Bedingungen NBR an. Für erhöhte Temperaturen sollte auf HNBR, ACM oder auch FKM zurückgegriffen werden.

Das in Fig. 1 abgebildete Batteriegehäuse 1 wurde im Inneren mit einem Unterdruck beaufschlagt und in Wasser gelagert. Während des Versuchs wurde der zuvor aufgebaute Druck aufgezeichnet, um so zusätzlich zu einer nachfolgenden Visuellen Kontrolle über einen eventuellen Druckverlust auf eine Leckage oder Undichtigkeit rückschließen zu können.

Die Testprozedur lehnt sich an die in einer Norm beschriebene IP 67 an, bei der von außen anstehendes Wasser mit einem Druck von 0.1 bar (entsprechend 1 m Wassersäule) nach einer Zeit von 30 min nicht zu einer Undichtigkeit der Dichtung 2 führen darf.

Als Dichtungsprinzip wurde in den durchgeführten Versuchen eine modular aufbaubare Dichtung 2, bestehend aus Eckverbindern 8 und Profildichtungen 6, verwendet. Aufgrund der relativ anspruchslosen Umgebungsbedingungen können die Profildichtungen 6 aus herkömmlichen Elastomeren wie EPDM oder NBR bestehen. NBR hat den Vorteil, dass nach Ablängung und Lagerung der Profildichtung 6 in der Regel kein Längenschrumpf zu beobachten ist. Für harschere Umgebungen, insbesondere heißes Öl, können höherwertige Elastomere, beispielsweise HNBR, ACM oder FKM, verwendet werden. Besonderen Anforderungen bei tiefen Temperaturen von weniger als -30 °C können beispielsweise Elastomer-Werkstoffe aus EPDM oder FKM gerecht werden. Solche Anforderungen treten z.B. bei Batterie-Systemen auf, welche als Back-up-Systeme bei Eisenbahnen verwendet werden.

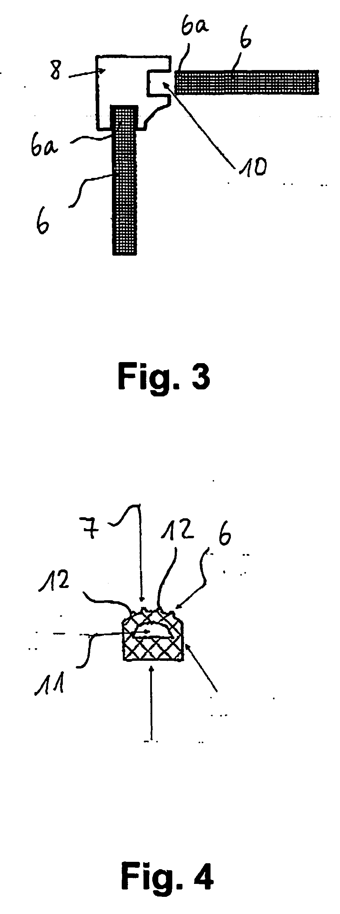

Fig. 3 zeigt, dass die Eckverbinder 8 Aussparungen 10 zur Aufnahme der Enden 6a der Profildichtungen 6 aufweisen. Fig. 3 zeigt eine Detailansicht eines Eckverbinders 8, in dessen Aussparungen 10 Profildichtungen 6 eingefügt sind. Der Werkstoff, der für den Eckverbinder 8 verwendet wird, muss auf jeden Fall weicher sein als der der Profildichtung 6. Der Werkstoff kann aus weichem Vollmaterial, aber auch aus geschlossenporigen Schäumen bestehen. Da der Eckverbinder 8 nicht in der Höhe toleranzausgleichend sein muss, sind die Anforderungen an seine elastischen Eigenschaften gering. Die Porengrößen bei geschlossenporigen Schäumen sollten vor allem für anspruchsvolle Anwenungen kleiner als 0,3 mm sein, da sich sonst Flüssigkeit am Übergang zwischen dem Schaum und der Profildichtung 6 vorbeidrücken kann.

Fig. 4 zeigt, dass mindestens eine Profildichtung 6 einen innenliegenden, vom Profildichtungsmaterial umschlossenen Hohlraum 11 aufweist. Fig. 4 zeigt eine Profildichtung 6, welche einen Hohlraum 11 umgibt. Bei von oben auftretender Belastung muss sich der Querschnitt nach außen wölben. Bevorzugt weist die Profildichtung 6 daher einen inneren Hohlraum 11 auf, der diese Auswölbung unterstützt, so dass diese schon bei relativ geringen Drücken auftritt. Vorteilhaft ist ein Endanschlag des Querschnitts vorgesehen. Vorteilhaft ist das Vorhandensein von longitudinalen Dichtrippen 12, die toleranzausgleichend wirken. Mindestens ein Eckverbinder 8 weist einen Endanschlag auf.

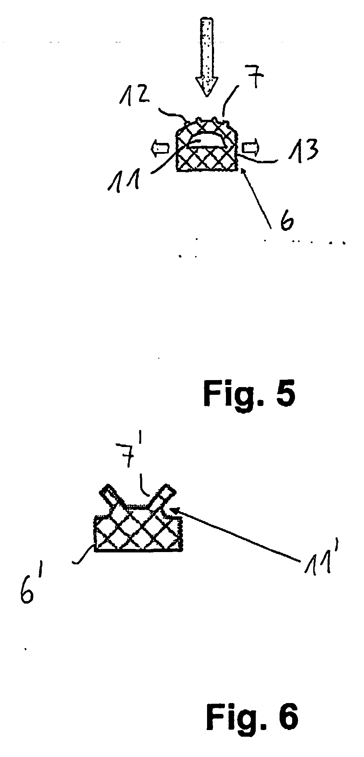

Fig. 5 zeigt, dass mindestens eine Profildichtung 6 bei Druckbeaufschlagung ihrer Dichtungsfläche 7 konvex auswölbbar ist. Fig. 5 zeigt, dass die Profildichtung 6 so aufgebaut ist, dass bei mechanischer Belastung beim Zusammenbau des Batteriegehäuses 1, beispielsweise einer Verspannung, der Werkstoff über die Flankenflächen 13 der Profildichtung 6 ausweicht und sich somit nach außen wölbt. Wichtig hierbei ist, dass bei dieser Auswölbung kein Teil der Flankenfläche 13 innerhalb der unbelasteten Flankenlinie verbleibt. Somit wird ein Spalt zwischen Profildichtung 6 und Eckverbinder 8 durch eine Verspannung der Wanne 3 mit dem Deckel 4 durch die Wölbung der Profildichtung 6 verpresst und einer Leckage entgegengewirkt. Diese Wölbung kann durch einen Hohlraum 11 im Inneren der Profildichtung 6 unterstützt werden. Dieser Hohlraum 11 hat den weiteren Nutzen, dass die Profildichtung 6 schon bei vergleichweise geringem Druck bzw. vergleichsweise geringer Verpressung eine gute Dichtwirkung und einen guten Toleranzausgleich erzielt.

Vorteilhaft ist des Weiteren die Anbringung von Rippen 12 auf der Dichtungsfläche 7 der Profildichtung 6, welche sich längs der Profildichtung 6 erstrecken. Diese Rippen 12 führen zu einer abermals verbesserten Dichtwirkung.

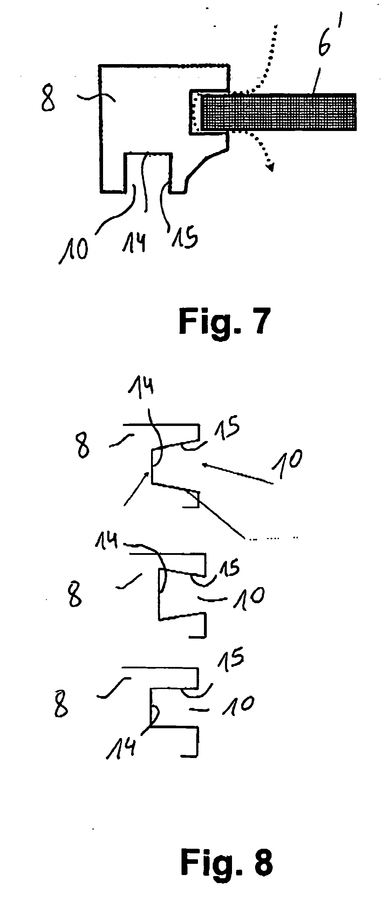

Fig. 6 zeigt eine Profildichtung 6' mit einer konkaven Dichtungsfläche 7'. Bei einer sich nach innen krümmenden, konkaven Flankenfläche, wie sie meist bei Profildichtungen vorliegt, kann sich ein seitlicher Hohlraum 11', nämlich eine seitlich offene Kaverne, ergeben, durch welche Wasser über einen überraschenden Leckageweg, quasi hinten herum, in den Innenraum des Batteriegehäuses gelangen kann. Dies ist in Fig. 7 gezeigt. Demnach sind solche Profildichtungen 6' unbedingt zu vermeiden. Es werden daher zur Realisierung der Erfindung kavemenfreie Profildichtungen 6 eingesetzt.

Fig. 8 zeigt Eckverbinder 8 mit verschiedenen Aussparungen 10. Die Eckverbinder 8 müssen weich genug sein, so dass sie einer sich nach außen krümmenden Flankenfläche 13 folgen können. Die Eckverbinder 8 müssen quasi zurecht gedrückt werden können. Dies kann beispielsweise durch im Vergleich zur Profildichtung 6 deutlich weichere Elastomere oder auch geschlossenporige Elastomer-Schäume erzielt werden.

Offenporige Schäume erlauben einen Leckagepfad durch die Materialmatrix. In Experimenten hat sich aber auch gezeigt, dass geschlossenporige Materialien ungeeignet sind, wenn deren Poren zu groß sind. Hier entsteht an der Dichtungskante Profildichtung-zu-Eckverbinder eine zu große Rauhigkeit, durch die Wasser bzw. Flüssigkeit hindurchwandem kann. Für Anwendungen unter unkritischeren Bedingungen kann ein solches Material unter Umständen allerdings verwendet werden.

Die verwendeten Eckverbinder sind in Fig. 8 gezeigt. Alle Eckverbinder 8 weisen Aussparungen 10 auf, in welche die Profildichtungen 6 durch eine Mundöffnung eingeführt bzw. eingelegt werden können. Diese Aussparungen sind durch eine hintere Anschlagsflanke 14 sowie Seitenflanken 15 begrenzt.

Je nach Ausführung können Anschlagsflanken 14 und Seitenflanken 15 einen rechten, einen stumpfen oder einen spitzen Winkel bilden. Denkbar ist auch, dass die Winkel zwischen der Anschlagsflanke 14 und den beiden Seitenflanken 15 unterschiedlich groß sind.

Eine nach außen offene Aussparung 10, bei weicher die Mundöffnung größer als die Anschlagsflanke 14 ist (obere Darstellung der Fig. 8), erlaubt ein einfaches Einführen der Profildichtungen 6. Die Aussparung 10 ist im Querschnitt trapezförmig ausgestaltet. Die Trapezform ist derart ausgebildet, dass sich die Aussparung 10 in Richtung der Profildichtung 6 aufweitet.

Eine nach innen sich erweiternde Aussparung 10, bei weicher die Mundöffnung kleiner als die Anschlagsflanke 14 ist (mittlere Darstellung in Fig. 8), führt zu einer verbesserten Abdichtung bei zu kurzen oder in der Länge schrumpfenden Profildichtungen 6. Hier ist die Trapezform derart ausgebildet, dass sich die Aussparung 10 in Richtung der Profildichtung 6 verjüngt.

Eine rechteckige Aussparung (unter Darstellung in Fig. 8) ist besonders einfach zu fertigen.

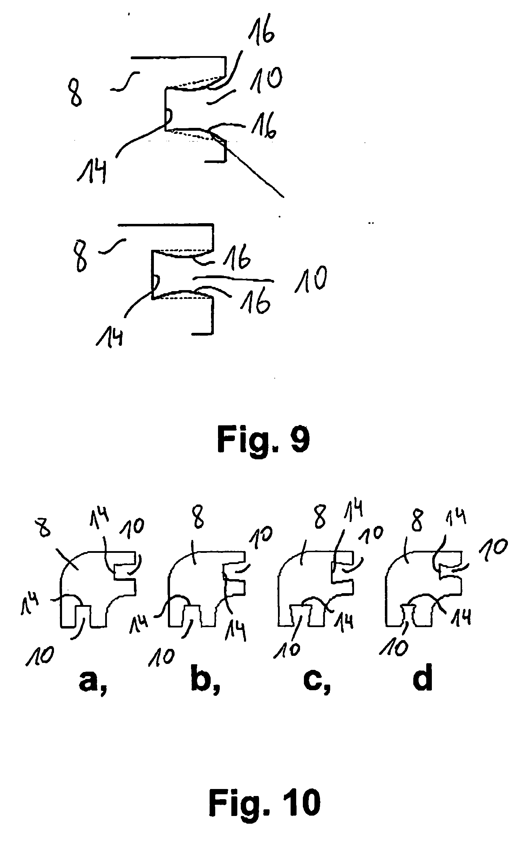

Fig. 9 zeigt Eckverbinder 8, bei denen eine oder beide Seitenflanken 16 Auswölbungen aufweisen, welche in Richtung der Profildichtung 6 weisen.

Auch hier kann wieder die Aussparung 10 trapezförmig nach außen oder nach innen geöffnet sein bzw. im Grunde rechteckiger Form sein. Fig. 9 zeigt, dass die Aussparungen 10 gewölbte Seitenflanken 16 zur Anlage an die Profildichtung 6 aufweisen.

Fig. 10 zeigt Standardausführungen von Eckverbindern 8 mit rechteckiger Aussparung 10 (a), zwei trapezförmige Aussparungen 10 mit der schmalen Seite als Anschlagsflanke 14 (b), bzw. als Mundöffnung (c) und eine Ausführung mit gewölbten Seitenflanken 16 (d).

Jeder der hier gezeigten Eckverbinder 8 wurde zur Untersuchung seines Dichtungsverhaltens in drei verschiedenen Werkstoffen ausgeführt. Diese Werkstoffe umfassen zum einen Silikonschaum mit mittlerem Porendurchmesser größer 0.3 mm, einen EPDM Zellkautschuk mit mittlerem Porendurchmesser kleiner 0.1 mm und ein Vollmaterial aus EPDM A-KD 30°.

Darüber hinaus wurden Versuche mit einem offenporigen Silikonschaum und dem Ausführungsbeispiel gemäß Fig. 10 a durchgeführt.

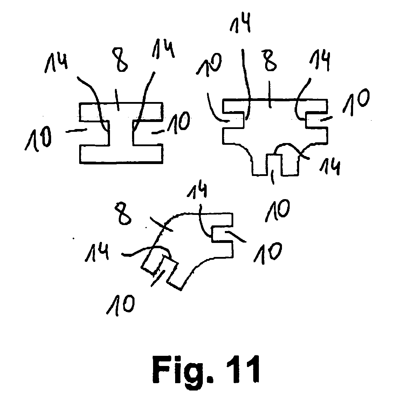

Fig. 11 zeigt weitere Ausführungsbeispiele von Eckverbindern 8. Die beiden Aussparungen 10 können einen Winkel von 90° zueinander aufweisen. Dies ist die beste Ausführung für rechteckige Gehäuse.

Die beiden Aussparungen 10 können einen Winkel zueinander haben, der von 90° abweicht. Diese in Fig. 11 unten gezeigte Ausführung ist bei trapezförmigen Gehäusen oder auch teilweise runden Gehäusesegmenten anwendbar.
Die beiden Aussparungen 10 können auch einen Winkel von 180° zueinander haben (Ausführung links oben in Fig. 11). Solche Bauteile oder Eckverbinder 8 können als Verbindungs- bzw. Verlängerungselemente eingesetzt werden. Der Eckverbinder 8 kann mehr als zwei Aussparungen 10 aufweisen. Diese in Fig. 11 rechts gezeigte Ausführung ist bei komplexen Gehäusen oder bei der Abtrennung von mehreren Innenräumen gegen die Umgebung und untereinander anwendbar.

Die Dichtungskomponenten - Profildichtung 6 oder Eckverbinder 8 bzw. Profildichtung 6 und Eckverbinder 8 - könnten in spezielle Nuten eines Gehäuses platziert werden. Eine solche Nut führt zu einer verbesserten Montierbarkeit bzw. verbesserten Fixierung. Eventuell hierbei auftretende Stufen müssen bei der Dickendimensionierung der Dichtungskomponenten berücksichtigt werden. Alternativ könnten die Dichtungskomponenten an einer Kante angelegt werden. Zudem kann durch Dimensionierung der Nut ein Endanschlag und damit eine gezielte Verpressung der Dichtung sichergestellt werden.

Die nachfolgende Tabelle gibt eine Übersicht über die durchgeführten Versuche und deren Ergebnisse. Dabei gelten die Aussagen für alle Geometrietypen der Eckverbinder 8.

| | EPDM Voll-material | EPDM Schaum (geschfossenporig), Mittl. Porengröße < 0,1 mm | Silikon Schaum (geschlossenporig), Mittl. Porengröße > 0,3 mm | Silikon Schaum (offenporig), Porengröße > 0,3 mm |
|---|---|---|---|---|
| Wasser | + | + | (-) | - |
| Wasser mit Spülmittel | + | + | (-) | - |
| Wasser bei 50°C | + | + | - | - |
| Toleranz, Deckel | + | ++ | - | - |
| Toleranz, Profildichtungslänge | +* | ++* | - | - |

| | | | | |
|---|---|---|---|---|
| * Hier hat sich im Vergleich zu den anderen Geometrietypen die Ausführung gemäß Fig. 10b (nach außen sich verbreiternde Mundöffnung) als etwas nachteilig erwiesen. | | | | |

Die Dichtung 2 muss auch gegen Wasser, welches mit Reinigungsmittel versetzt ist, dicht sein. Dies tritt in der Realität auf, wenn Batteriegehäuse 1 im Unterboden eines Fahrzeuges platziert sind und das Fahrzeug durch eine Waschanlage fährt.

Besonders kritisch ist hierbei, dass die in Reinigungsmitteln enthaltenen Tenside bzw. Netzmittel die Oberflächenspannung des Wassers herabsetzen und dadurch die Durchdringung des Wassers an oberflächennahen Leckagepfaden vereinfachen.

Hierzu wurde folgendes Experiment durchgeführt:
Wasser wurde versetzt mit Spülmittel "Pril Original" (Fa. Henkel) in einer Konzentration von 0,5 ml/l und die Mischung gut verrührt.

Gemäß dem zuvor beschriebenen Versuchsaufbau wurden nun mit dem neuen Medium die drei Werkstoffe erneut mit den Eckverbindern 8 gemäß Fig. 10a, b, c und d durchgeführt.

Des Weiteren wurde überprüft, ob das System auch gegenüber warmem Wasser dicht ist. Dabei wurden die zuvor genannten Experimente in einem durch einen Thermostat beheizten Becken wiederholt.

Bei einem weiteren Experiment wurde der Einfluss der Toleranz eines sich verziehenden Deckels auf die Dichtwirkung überprüft. Dabei wurden Hülsen mit unterschiedlichen Längen in die Befestigungsschrauben 9 platziert.

In einem weiteren Experiment wurde der Einfluss der Toleranz der Profildichtungslänge auf die Dichtwirkung überprüft. Dabei wurden pro Aussparung die Profildichtungen 6 bewusst 2-3 mm zu kurz abgeschnitten.

Darüber hinaus wurde geprüft, ob das System auch bei innerem Überdruck dicht ist.

Dies kann für Batterien relevant sein, da bei der Öffnung einzelner Zellen im Schadensfall eine Gasentwicklung durch toxische und / oder brennbare Gase mit deutlichem Druckanstieg stattfindet. Eine Dichtung 2 sollte diesem inneren

Überdruck standhalten können. Hier ist allerdings anzumerken, dass Batteriegehäuse in der Regel mit einem Überdruck-Ventil bzw. einer Berstscheibe versehen sind, die diese Gasentwicklung sicher nach außen abführen sollen. Das heisst, dass länger anstehende deutliche Überdrücke in Batteriegehäusen in der Regel nicht praxisrelevant sind.

Dazu wurde das System Batteriegehäuse 1 - Dichtung 2 im Wassertank in vier Experimenten mit jeweils EPDM-Vollmaterial bzw. EPDM-Schaum mit jeweils der Ausführung gemäß Fig. 10 a und d mit einem inneren Überdruck von 1 bar über einen Zeitraum von 2 Stunden beaufschlagt. Während dieser Zeit traten nur ein leichter Druckverlust bzw. eine leichte Bläschenentwicklung an der Dichtung 2 auf.

Bei einem weiteren Experiment mit stärkerer Verpressung (Hülsenhöhe 4 mm) der Dichtung 2 konnte sowohl bei Einsatz von EPDM-Vollmaterial bzw. EPDM-Schaum als Eckverbinder-Material eine vollständige Dichtwirkung erzielt werden.

Darüber hinaus wurden zyklische Druckschwankungen simuliert. Druckschwankungen treten z.B. in Batteriegehäusen 1 bei Temperatur-Unterschieden bzw. Berg- und Talfahrten auf, wenn das Batteriegehäuse 1 an sich hermetisch abgeschlossen ist.

Um dies zu simulieren, wurde das System im Wassertank in einem Rhythmus von einer Minute abwechselnd von einem Überdruck von 1 bar auf einen Unterdruck von 0.1 bar gebracht. Nach 2 Stunden und 120 Lastwechseln wurde das System zunächst für eine Stunde einem konstanten Unterdruck von 0.1 bar und anschließend einem konstanten Überdruck von 1 bar ausgesetzt. Bei beiden Tests traten keinerlei Druckänderung bzw. sichtbare Leckage, beispielsweise Wassertröpfchen oder Luftbläschen, auf.

## Patentansprüche

1. Dichtung (2) für ein Gehäuse, umfassend einen Grundkörper (5), wobei der Grundkörper (5) Profildichtungen (6) mit profilierten Dichtungsflächen (7) aufweist, wobei die Profildichtungen (6) erste Enden (6a) und zweite Enden (6b) aufweisen, **w**obei mindestens zwei Profildichtungen (6) durch einen Eckverbinder (8) an jeweils einem ihrer Enden (6a, 6b) miteinander verbunden sind **und wobei die Eckverbinder (8) Aussparungen (10) zur Aufnahme der Enden (6a, 6b) der Profildichtungen (6) aufweisen,**
**dadurch gekennzeichnet, dass mindestens eine Profildichtung (6) bei Druckbeaufschlagung ihrer Dichtungsfläche (7) konvex auswölbbar ist, wobei mindestens eine Profildichtung (6) einen innenliegenden, vom Profildichtungsmaterial umschlossenen Hohlraum (11) aufweist**

2. Dichtung nach **Anspruch 1**, **dadurch gekennzeichnet, dass** die Eckverbinder (8) weicher als die Profildichtungen (6) sind und/ oder aus einem elastischen, geschlossenporigen Material bestehen.

3. Dichtung nach **Anspruch 1 oder 2**, **dadurch gekennzeichnet, dass** die Eckverbinder (8) einen mehrlagigen Aufbau aufweisen.

4. Dichtung nach **einem der Ansprüche 1 bis 3, dadurch gekennzeichnet, dass** die Aussparungen (10) im Querschnitt trapezförmig ausgestaltet sind.

5. Dichtung nach Anspruch 4, **dadurch gekennzeichnet, dass** die Trapezform derart ausgebildet ist, dass sich die Aussparung (10) in Richtung der Profildichtung (6) aufweitet.

6. Dichtung nach Anspruch **4 oder 5**, **dadurch gekennzeichnet, dass** die Trapezform derart ausgebildet ist, dass sich die Aussparung (10) in Richtung der Profildichtung (6) verjüngt.

7. Dichtung nach einem der Ansprüche **1 bis 6**, **dadurch gekennzeichnet, dass** die Aussparungen (10) gewölbte Seitenflanken (16) zur Anlage an die Profildichtung (6) aufweisen.

8. Dichtung nach einem der Ansprüche **1 bis 7**, **dadurch gekennzeichnet, dass** die Eckverbinder (8) und die Profildichtungen (6) ineinander steckbar sind.

9. Dichtung nach einem der Ansprüche **1 bis 8**, **dadurch gekennzeichnet, dass** die Eckverbinder (8) und die Profildichtungen (6) miteinander durch chemische und / oder thermische Fixierung verbindbar sind.

10. Dichtung nach einem der Ansprüche **1 bis 9**, **dadurch gekennzeichnet, dass** die Eckverbinder (8) und die Profildichtungen (6) Auflageflächen aufweisen, an denen ein Klebeband angeordnet ist.

11. Dichtung nach einem der Ansprüche **1 bis 10**, **dadurch gekennzeichnet, dass** mindestens ein Eckverbinder (8) in eine Schraube oder eine Hülse (9) integriert ist.

12. Dichtung nach einem der Ansprüche **1 bis 11**, **dadurch gekennzeichnet, dass** mindestens ein Eckverbinder (8) einen Endanschlag aufweist.

13. Dichtung nach einem der Ansprüche **1 bis 12, dadurch gekennzeichnet, dass** die Eckverbinder (8) und / oder die Profildichtungen (6) elektrisch leitfähige Partikel aufweisen.

14. Dichtung nach einem der Ansprüche **1 bis 13**, **dadurch gekennzeichnet, dass** einer oder mehrere der Eckverbinder (8) über mehr als zwei Aussparungen zur Aufnahme der Profildichtungen (6) verfügt.

15. Gehäuse mit einer Dichtung (2) nach einem der voranstehenden Ansprüche.

## Claims

1. Seal (2) for a housing, comprising a base body (5), the base body (5) having profile seals (6) with profiled sealing surfaces (7), the profile seals (6) having first ends (6a) and second ends (6b), at least two profile seals (6) being interconnected by a corner connector (8) at one of their ends (6a, 6b) in each case and the corner connectors (8) having cutouts (10) for holding the ends (6a, 6b) of the profile seals (6), **characterized in that** at least one profile seal (6) can be convexly cambered with the application of pressure to its sealing surface (7), at least one profile seal (6) having an internal cavity (11) surrounded by the profile seal material.

2. Seal according to Claim 1, **characterized in that** the corner connectors (8) are softer than the profile seals (6) and/or consist of an elastic, closed-cell material.

3. Seal according to Claim 1 or 2, **characterized in that** the corner connectors (8) have a multilayer structure.

4. Seal according to one of Claims 1 to 3, **characterized in that** the cutouts (10) are designed with a trapezoidal cross section.

5. Seal according to Claim 4, **characterized in that** the trapezoidal shape is designed in such a way that the cutout (10) widens in the direction of the profile seal (6).

6. Seal according to Claim 4 or 5, **characterized in that** the trapezoidal shape is designed in such a way that the cutout (10) tapers in the direction of the profile seal (6).

7. Seal according to one of Claims 1 to 6, **characterized in that** the cutouts (10) have cambered lateral flanks (16) for bearing against the profile seal (6).

8. Seal according to one of Claims 1 to 7, **characterized in that** the corner connectors (8) and the profile seals (6) can be plugged into one another.

9. Seal according to one of Claims 1 to 8, **characterized in that** the corner connectors (8) and the profile seals (6) can be interconnected by chemical and/or thermal fixing.

10. Seal according to one of Claims 1 to 9, **characterized in that** the corner connectors (8) and the profile seals (6) have bearing surfaces on which an adhesive tape is arranged.

11. Seal according to one of Claims 1 to 10, **characterized in that** at least one corner connector (8) is integrated in a screw or in a sleeve (9).

12. Seal according to one of Claims 1 to 11, **characterized in that** at least one corner connector (8) has an end stop.

13. Seal according to one of Claims 1 to 12, **characterized in that** the corner connectors (8) and/or the profile seals (6) have electrically conductive particles.

14. Seal according to one of Claims 1 to 13, **characterized in that** one or more of the corner connectors (8) has/have more than two cutouts for holding the profile seals (6).

15. Housing having a seal (2) according to one of the preceding claims.

## Revendications

1. Joint d'étanchéité (2) pour un boîtier, comportant un corps de base (5), le corps de base (5) comprenant des joints profilés (6) dotés de surfaces d'étanchéité profilées (7), les jointes profilés (6) comprenant des premières extrémités (6a) et des deuxièmes extrémités (6b), au moins deux joints profilés (6) étant reliés les uns aux autres par un connecteur d'angle (8) à l'une de leurs extrémités (6a, 6b) respectives, et les connecteurs d'angle (8) comprenant des évidements (10) pour recevoir les extrémités (6a, 6b) des joints profilés (6),
**caractérisé en ce qu'**au moins un joint profilé (6) peut être bombé de manière convexe lors d'une sollicitation en pression de sa surface d'étanchéité (7), au moins un joint profilé (6) comprenant une cavité (11) située à l'intérieur et entourée de matériau de joint d'étanchéité.

2. Joint d'étanchéité selon la revendication 1, **caractérisé en ce que** les connecteurs d'angle (8) sont plus souples que les joints profilés (6) et/ou sont constitués d'un matériau élastique à pores fermés.

3. Joint d'étanchéité selon la revendication 1 ou 2, **caractérisé en ce que** les connecteurs d'angle (8) présentent une structure multicouche.

4. Joint d'étanchéité selon l'une quelconque des revendications 1 à 3, **caractérisé en ce que** les évidements (10) sont configurés sous forme trapézoïdale en section transversale.

5. Joint d'étanchéité selon la revendication 4, **caractérisé en ce que** la forme trapézoïdale est configurée de telle sorte que l'évidement (10) s'élargit en direction du joint profilé (6).

6. Joint d'étanchéité selon la revendication 4 ou 5, **caractérisé en ce que** la forme trapézoïdale est réalisée de telle sorte que l'évidement (10) se rétrécit en direction du joint profilé (6).

7. Joint d'étanchéité selon l'une quelconque des revendications 1 à 6, **caractérisé en ce que** les évidements (10) présentent des flancs latéraux bombés (16) pour s'appuyer contre le joint profilé (6).

8. Joint d'étanchéité selon l'une quelconque des revendications 1 à 7, **caractérisé en ce que** les connecteurs d'angle (8) et les joints profilés (6) peuvent être emboîtés les uns dans les autres.

9. Joint d'étanchéité selon l'une quelconque des revendications 1 à 8, **caractérisé en ce que** les connecteurs d'angle (8) et les joints profilés (6) peuvent être reliés les uns aux autres par fixation chimique et/ou thermique.

10. Joint d'étanchéité selon l'une quelconque des revendications 1 à 9, **caractérisé en ce que** les connecteurs d'angle (8) et les joints profilés (6) présentent des surfaces d'appui sur lesquelles est disposé un ruban adhésif.

11. Joint d'étanchéité selon l'une quelconque des revendications 1 à 10, **caractérisé en ce qu'**au moins un connecteur d'angle (8) est intégré dans une vis ou une douille (9).

12. Joint d'étanchéité selon l'une quelconque des revendications 1 à 11, **caractérisé en ce qu'**au moins un connecteur d'angle (8) comprend une butée de fin de course.

13. Joint d'étanchéité selon l'une quelconque des revendications 1 à 12, **caractérisé en ce que** les connecteurs d'angle (8) et/ou les joints profilés (6) comprennent des particules électriquement conductrices.

14. Joint d'étanchéité selon l'une quelconque des revendications 1 à 13, **caractérisé en ce qu'**un ou plusieurs parmi les connecteurs d'angle (8) disposent de plus de deux évidements pour recevoir les joints profilés (6).

15. Boîtier comprenant un joint d'étanchéité (2) selon l'une quelconque des revendications précédentes.
